# EUROPÄISCHE PATENTSCHRIFT

(11) **EP 2 482 148 B1**
(45) Veröffentlichungstag und Bekanntmachung des Hinweises auf die Patenterteilung: **13.06.2018**
(21) Anmeldenummer: 11152195.1
(22) Anmeldetag: 26.01.2011
(51) Int. Cl.: G05B 19/042, G05B 19/05

(54) **Verfahren für die Projektierung und/oder Programmierung einer multifunktionalen Komponente einer industriellen Automatisierungsanordnung**
Method for projecting and/or programming a multi-functional component of an industrial automation assembly
Procédé de projection et/ou de programmation d'un composant multifonctionnel d'un agencement d'automatisation industriel

(43) Veröffentlichungstag der Anmeldung: 01.08.2012
(73) Patentinhaber: Siemens Aktiengesellschaft, 80333 München (DE)
(72) Erfinder: Ketzer, Martin, 91058 Erlangen (DE); Kob, Peter, 90562 Heroldsberg (DE); Kohl, Thomas, 91580 Petersaurach (DE); Lange, Ronald, 90766 Fürth (DE); Narr, oliver, 90443 Nürnberg (DE)

(56) Entgegenhaltungen:
- EP-A2- 1 233 317
- WO-A1-2005/033810
- SIEMENS AG: "Application for Human Machine Interface, Applications & Tools: PC-based Automation with SIMATIC WinAC, Configuration and Operation of WinCC and Tuning of WinAC RTX", 20040728, [Online] Nr. V 1.0, 28. Juli 2004 (2004-07-28), Seiten 1-44, XP002625887, Gefunden im Internet: URL:http://support.automation.siemens.com> [gefunden am 2011-03-02]

## Beschreibung

Die Erfindung betrifft ein Verfahren für die Projektierung und/oder Programmierung einer multifunktionalen Komponente einer industriellen Automatisierungsanordnung gemäß dem Oberbegriff des Patentanspruchs 1.

Industrielle Automatisierungsanordnungen bestehen regelmäßig aus einer Vielzahl von Geräten, Steuerungseinrichtungen, Bedieneinrichtungen, Beobachtungseinrichtungen etc., die im Folgenden kurz als "Komponenten" bezeichnet werden sollen. Diese Komponenten umfassen regelmäßig Mikroprozessoren und andere Einrichtungen, so dass sie erst durch die Programmierung mittels einer geeigneten Software ihre Funktionalität erlangen. Darüber hinaus muss auch die Anordnung und das Zusammenwirken einer Vielzahl von Komponenten festgelegt und koordiniert werden; dieser Vorgang wird meist als "Projektierung" bezeichnet bzw. als Teil einer solchen betrachtet. Für die Programmierung und Projektierung industrieller Automatisierungsanordnungen bzw. der darin enthaltenen Komponenten werden meist spezielle Arbeitsplätze verwendet, die oft als "Engineering-System" bezeichnet werden; allgemein kann gesagt werden, dass für die Programmierung und Projektierung eine geeignete Infrastruktur bereitgestellt werden muss.

In den industriellen Automatisierungsanordnungen sind, wie bereits angedeutet, Komponenten mit unterschiedlichen Funktionalitäten bekannt. So werden beispielsweise Steuerungseinrichtungen und Bedien- und Beobachtungsgeräte unterschieden. Für diese Komponenten unterschiedlicher Funktionalität werden für die Engineering-Systeme regelmäßig auch unterschiedliche Anwendungen benötigt. So werden beispielsweise die Programme, die für Steuerungsgeräte (auch "SPS" oder "CPU" genannt) häufig andere Compiler und Hilfsmittel verwendet, als für diejenigen Programme, die für die Bedien- und Beobachtungsgeräte (auch "HMI-Geräte" genannt) vorgesehen sind. Weiterhin sind für die bekannten Anwendungen, die beim "Engineering" zum Einsatz kommen, unterschiedliche Ausbaustufen bekannt. Dies bedeutet, dass für diese Anwendungen unterschiedliche Versionen vermarktet werden, wobei beispielsweise eine Version mit einer Basis-Funktionalität einen beschränkten Funktionsumfang hat oder nur für Projekte mit einer beschränkten Anzahl von Komponenten gedacht ist, während eine "professionelle" oder "volle" Version eine größere Funktionalität umfasst und weniger oder keinen anderen Beschränkungen unterliegt.

Es ist ein weiteres Merkmal der industriellen Automatisierungsanordnungen, dass vermehrt multifunktionale Geräte als Komponenten verwendet werden. Diese multifunktionalen Geräte, auch multifunktionale Komponenten genannt, können beispielsweise gleichzeitig die Funktionalität einer Steuerungseinrichtung und die Funktionalität eines Bedien- und Beobachtungsgerätes ausfüllen. Häufig wird dies dadurch realisiert, dass auf ein- und derselben Hardware-Plattform (physikalische Komponente) mittels eines "multitasking"-fähigen Betriebssystems mehrere Prozesse gleichzeitig oder quasi-gleichzeitig ablaufen, wobei jeder der Prozesse bzw. jede Gruppe von Prozessen der Komponente eine der gewünschten Funktionalitäten verleiht. Insbesondere bei den multifunktionalen Komponenten kann es daher vorkommen, dass für das "Engineering", also für die Projektierung und die Programmierung, gleichzeitig oder nacheinander eine Vielzahl unterschiedlicher Anwendungen verwendet werden müssen. Insbesondere bedeutet dies, dass ein sog. "Projekt", in welchem die für die multifunktionale Komponente oder für die zur programmierende Automatisierungseinrichtung notwendigen Software-Objekte zusammengefasst sind, nur dann umfassend bearbeitet werden kann, wenn für jedes der enthaltenen Software-Objekte eine zu der Bearbeitung oder Programmierung geeignete Anwendung in der verwendeten Infrastruktur (Engineering-System) vorhanden ist.

Dabei sind in der Automatisierungstechnik oft modulare Strukturen in Verwendung, so dass beispielsweise ein Computer ("Panel-PC"), der zum Bedienen und Beobachten eingesetzt wird, von einem Anwender auch so konfiguriert werden kann, dass eine Steuerungsfunktionalität hinzugefügt wird; die Steuerungsfunktionalität wird also durch das Laden eines entsprechenden Software-Moduls hinzugefügt. Diese Modularität kann sogar soweit vorgesehen sein, dass ein Basisgerät, beispielsweise ein Personal-Computer, zunächst einmal überhaupt keine spezifische Automatisierungsfunktionalität besitzt und diese erst über das Vorsehen (Projektieren und Programmieren) entsprechender Software-Objekte hinzugefügt wird. Ein Beispiel dafür wird in Dokument "Application for Human Machine Interface; Applications & Tools: PCbased Automation with SIMATIC WinAC" beschrieben. Bislang liegt es in der Verantwortung eines Anwenders, sicherzustellen, dass eine Infrastruktur bzw. ein Engineering-System mit allen Anwendungen ausgerüstet ist, die zum Öffnen, Anlagen oder Bearbeiten eines Projektes bzw. der darin enthaltenen Software-Objekte notwendig sind. Insbesondere bei solchen Systemen, bei denen die Software-Objekte eine Vielzahl einzelner Funktionen umfassen können, wobei darüber hinaus für unterschiedliche enthaltene Funktionen auch unterschiedliche Anwendungen zu deren Bearbeitung etc. notwendig sind, ist es schwer zu entscheiden, ob das entsprechende Objekt mit den vorhandenen Mitteln überhaupt geöffnet, bearbeitet oder erweitert werden kann.
Es ist also eine Aufgabe der vorliegenden Erfindung, die Projektierung und Programmierung von Komponenten in industriellen Automatisierungsanordnungen dadurch zu vereinfachen, so dass die für einen gewünschten Bearbeitungsschritt benötigten Anwendungen automatisch und somit einfach und sicher identifiziert werden können.
Die Aufgabe wird durch den Einsatz eines Verfahrens gemäß dem unabhängigen Patentanspruch gelöst.
Es ist dabei eine zentrale Idee der vorliegenden Erfindung, dass mit dem Projekt auch Informationen (Angaben) über die in den Software-Objekten verwendeten Funktionen bzw. Funktionen-Gruppen gespeichert werden, wobei den Funktionen bzw. den Funktionen-Gruppen (auch Funktions-Gruppen genannt) jeweils Anwendungen zugeordnet sind, mit denen die Software-Objekte der entsprechenden Funktionen bzw. Funktionen-Gruppen angelegt oder bearbeitet werden können, bzw. diejenigen Anwendungen, die zum Öffnen des Projektes mit den Software-Objekten mit diesen Funktionen bzw. Funktionen-Gruppen geeignet sind.

Die Angaben über die in den Software-Objekten verwendeten Funktionen werden dabei als Funktions-Objekte gespeichert.

Die Lösung der Aufgabe sieht insbesondere ein Verfahren für die Projektierung- und/oder Programmierung einer multifunktionalen Komponente einer industriellen Automatisierungsanordnung vor, wobei in einem Projekt eine Mehrzahl Software-Objekte gespeichert werden, wobei die Software-Objekte jeweils eine Funktionalität der Komponente betreffen, und wobei die Software-Objekte mit Funktionen ausgerüstet oder erweitert werden. Dabei ist den Software-Objekten abhängig von der jeweiligen Funktionalität der enthaltenen Funktionen zumindest eine Anwendung zur Programmierung zugeordnet, wobei Angaben über die in den Software-Objekten des Projektes verwendeten Funktionen mit dem Projekt gespeichert werden, und wobei anhand der Angaben und anhand einer jeweiligen Art und/oder Ausbaustufe der Anwendungen jeweils entschieden wird, ob von einer Infrastruktur mit installierten Anwendungen das Projekt geöffnet werden kann oder darf und/oder ob mittels der mit den installierten Anwendungen ausgestatteten Infrastruktur ein jeweiliges Software-Objekt des Projektes angelegt und/oder bearbeitet werden kann oder darf. Durch ein solches Verfahren können in einer Infrastruktur bzw. einem Engineering-System automatisch diejenigen Anwendungen selektiert und gestartet werden, die für den jeweiligen Verarbeitungsschritt (Anlegen, Öffnen, Bearbeiten) notwendig sind.

Vorteilhafte Ausgestaltungen des erfindungsgemäßen Verfahrens sind in den abhängigen Patentansprüchen angegeben.

Vorteilhaft wird für jede Art oder jeden Typ einer im Projekt verwendeten Funktion oder Funktionsgruppe jeweils ein zugeordnetes Funktionsobjekt im Projekt gespeichert, wobei für die den verfügbaren Anwendungen jeweils zum Öffnen, Anlegen und Bearbeiten zugeordneten Funktionen oder Funktionsgruppen jeweils ein Anwendungsobjekt in einer für die Projektierung und/oder Programmierung genutzten Infrastruktur gespeichert wird, wobei die Entscheidung über die Möglichkeit oder die Befugnis zum Öffnen des Projektes und/oder über das Anlegen oder die Bearbeitung der im Projekt enthaltenen Software-Objekte jeweils durch einen Vergleich der Funktionsobjekte mit den Anwendungsobjekten getroffen wird. Dadurch, dass für jede verschiedene Art an Funktion bzw. Funktionsgruppe nur ein einziges Software-Objekt stellvertretend gespeichert wird, können die Entscheidungen anhand des Vergleichs bzw. der Untersuchung einer relativen kleinen Anzahl von Funktionsobjekten getroffen werden. Darüber hinaus ergibt sich der Vorteil, dass die bekannten Infrastrukturen und Engineering-Systeme ohnehin die Verwaltung von Objekten beherrschen, so dass das Verfahren ohne eine Änderung der Infrastruktur implementiert werden kann. Dasselbe gilt für die Verwendung von Anwendungsobjekten. In alternativen Ausführungsformen können die Funktionsobjekte oder die Anwendungsobjekte mittels einzelner XML-Dateien oder mittels Einträgen in einer XML-Datei repräsentiert werden. Insbesondere ist es möglich, sowohl für die Funktionsobjekte als auch für die Anwendungsobjekte jeweils eine getrennte XML-Datei oder eine getrennte Objekt-Gruppe vorzusehen.

Vorteilhaft wird bei den Software-Objekten zumindest zwischen Hüllobjekten, die ohne Funktionen oder nur mit Basisfunktionen ausgestattet sind, und Vollobjekten mit jeweils zumindest einer weiteren Funktion unterschieden. Als Basisfunktionen sollen dabei solche Funktionen bezeichnet werden, deren Vorhandensein die Art oder Anzahl der verwendbaren Anwendungen nicht oder nicht signifikant beeinflusst. Dies bedeutet, dass Hüllobjekte ohne Funktionen oder Hüllobjekte mit lediglich anwesenden Basisfunktionen von vielen oder allen Anwendungen angelegt werden können, wobei weiterhin Projekte, die nur Hüllobjekte umfassen, ebenfalls von vielen oder sogar allen Anwendungen geöffnet werden können.

Durch die Bearbeitung von Hüllobjekten, insbesondere durch die Anreicherung der Hüllobjekte mit Funktionen, die keine Basisfunktionen sind, beispielsweise Programmcode, werden diese Hüllobjekte zu Vollobjekten, die nur noch von solchen Anwendungen bearbeitet werden können, die zur Bearbeitung der enthaltenen Funktionen geeignet sind. Dies bedeutet weiterhin, dass zum Öffnen eines Projektes, in dem Vollobjekte enthalten sind, die Infrastruktur mit den passenden Anwendungen ausgestattet sein muss. Vollobjekte können vorteilhaft in unterschiedlichen Ausprägungen, d.h. mit unterschiedlicher Komplexität auftreten, wobei das Spektrum der enthaltenen Funktionen bzw. Funktionen-Gruppen durch die im Projekt gespeicherten Angaben, insbesondere Funktionsobjekte, repräsentiert wird.

Bei den enthaltenen Funktionen bzw. Funktionen-Gruppen kann in einer vorteilhaften Ausgestaltung zwischen optionalen und erforderlichen ("must") Funktionen bzw. Funktionen-Gruppen unterschieden werden, wobei in solchen Fällen die im Projekt bzw. der Projekt-Datei enthaltenen optionalen Funktionen bzw. Funktionen-Gruppen das Öffnen oder das Bearbeiten des Projekts auch dann nicht verhindern, wenn die installierten oder verfügbaren Anwendungen diese optionalen Funktionen bzw. Funktionen-Gruppen nicht unterstützen, wogegen die erforderlichen ("must") Funktionen bzw. Funktionen-Gruppen von den installierten oder verfügbaren Anwendungen unterstützt werden müssen, um ein Öffnen oder eine Bearbeitung des Projekts zu ermöglichen. Dabei werden vorteilhaft nicht die Funktionen bzw. Funktionen-Gruppen als solche gekennzeichnet, sondern die zugehörigen Funktionsobjekte. Diese Zuordnung eines Status' "optional" oder "erforderlich" kann auch implizit vorhanden sein, also ohne explizite Kennzeichnung einer Funktion, Funktionen-Gruppe oder eines Funktionsobjektes.

Beim erstmaligen Verwenden einer Funktion im Projekt wird das zugehörige Funktionsobjekt erzeugt, wogegen nach Entfernen der letzten derartigen Funktion bzw. des letzten Mitgliedes einer Funktionsgruppe das entsprechende Funktionsobjekt wieder entfernt wird. Entsprechendes gilt für die Anwendungsobjekte, die dann genau einmal der Infrastruktur zugeordnet bzw. in dieser gespeichert werden, wenn zumindest eine der installierten bzw. verfügbaren Anwendungen zum Anlegen, Öffnen oder zur Bearbeitung der entsprechenden Funktionen bzw. Funktionen-Gruppen geeignet oder eingerichtet ist.

Besonders vorteilhaft lässt sich das Verfahren anwenden, wenn Projekte für oder mit multifunktionalen Komponenten oder Projekte für Anordnungen mit mehreren Komponenten unterschiedlicher Funktionalität geöffnet, bearbeitet oder darin Software-Objekte angelegt oder bearbeitet werden sollen. Solche Projekte gehen üblicher Weise mit der Verwendung einer Mehrzahl von Anwendungen einher, wobei vorteilhaft jede Art von Anwendung eine Gruppe von funktionsähnlichen Anwendungen in unterschiedlichen Ausbaustufen und Versionen umfassen kann. Vorteilhafter Weise umfassen Anwendungen einer hohen Ausbaustufe alle Möglichkeiten der Anwendungen der gleichen Gruppe in einer niedrigeren Ausbaustufe, aber nicht umgekehrt. Bezüglich der Versionen können einem Funktionsobjekt diejenigen Versionen einer Anwendung zugeordnet sein, die zum Öffnen oder Bearbeiten eines Software-Objekts mit der betreffenden Funktion / Funktionen-Gruppe geeignet sind. Die entsprechenden Informationen können in jeweils in den Funktionsobjekten codiert/enthalten sein, oder aber aus einer Zuordnungs-Datenbank ausgelesen werden. Falls mehrere Ausbaustufen oder Versionen geeignet sind, kann festgelegt sein, dass beispielsweise die höchstwertige der geeigneten und installierten Anwendungen gestartet und verwendet wird.

Die Funktionsobjekte können nicht nur dafür verwendet werden, konkret benutzte Funktionalität zu kennzeichnen, sondern auch dem Anwender oder der verwendeten Infrastruktur einen Hinweis darauf geben, mit welchem Produkt oder Anwendung die Komponente vollständig, also beispielsweise als sog. "Vollobjekt", bearbeitet werden könnte, und zwar auch in den Fällen, in denen das Software-Objekt noch gar nicht bearbeitet wurde und noch als "Hüllobjekt" vorliegt. Die diesbezüglichen Funktionsobjekte sollten dabei als "optional" gekennzeichnet sein.

Ein Ausführungsbeispiel des erfindungsgemäßen Verfahrens wird nachfolgend anhand der Zeichnungen erläutert.

Dabei zeigen:
- Figur 1: ein Kombigerät als Software-Objekt mit zugeordneten Anwendungen, und
- Figur 2: das Software-Objekt mit zugeordneten Funktionen und diesen zugeordneten Anwendungen.

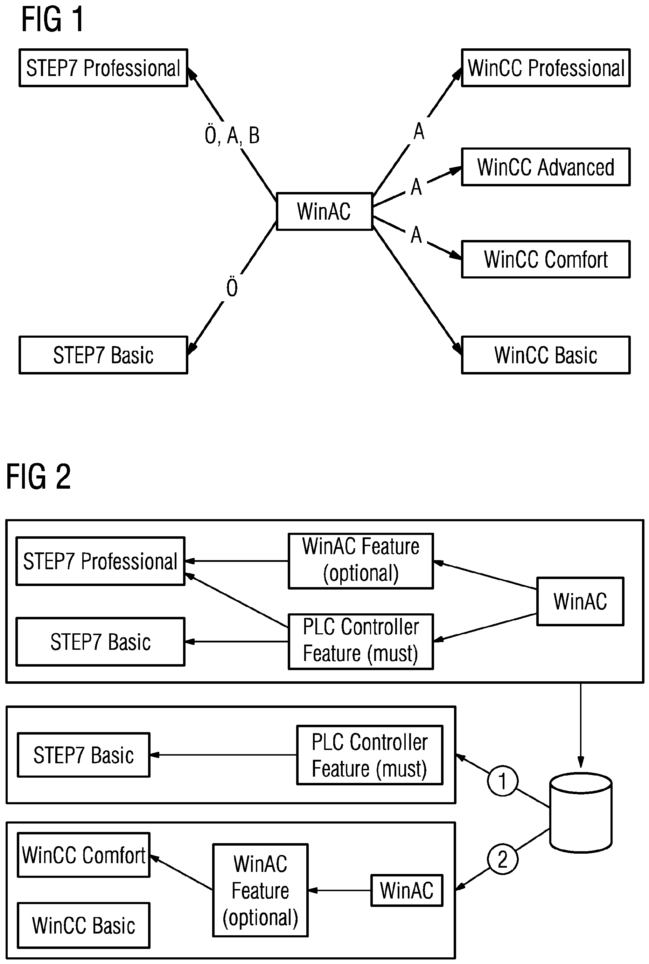

In der Figur 1 sind schematisch die Anwendungen STEP7, WinCC in verschiedenen Ausbaustufen Basic, Professional bzw. Basic, Comfort, Advanced, Professional dargestellt, die Bestandteil einer Infrastruktur (Engineering-System) zum Projektieren und/oder Programmieren einer industriellen Automatisierungsanordnung sein können. Dabei sind die STEP7-Anwendungen primär zur Projektierung und Programmierung von SteuerungsFunktionen und die WinCC-Anwendungen für die Projektierung und Programmierung von Bedien- und Beobachtungsfunktionen gedacht. Im Folgenden soll exemplarisch der Bezug dieser Anwendungen zu der Projektierung bzw. Programmierung eines Systems WinAC dargestellt werden. Das System WinAC ist dabei eine industrielle Steuerung, die als ein Prozess auf einem Standard-Personal-Computer installiert werden kann. Dabei kann ein System WinAC, also die Software, die dem Personal-Computer diese gewünschte Funktionalität verleiht, entweder als reines Steuerungssystem im Sinne einer "PLC" (Programmable Logic Controller) ausüben, oder aber zusätzlich eine Benutzeroberfläche zum Bedienen und zum Beobachten des gesteuerten Prozesses bzw. der gesteuerten Automatisierungsanordnung bereit stellen.

In der Figur 1 sind dabei die grundsätzlichen Möglichkeiten aufgezeigt, die sich aus der Verfügbarkeit einer der aufgezählten Anwendungen im Rahmen der für die Projektierung bzw. Projektierung verwendeten Infrastruktur ergeben. Dabei wird zwischen Öffnen Ö, Anlegen A und Bearbeiten B unterschieden. Dies bedeutet, bezogen auf die Figur 1, dass beispielsweise die Anwendung STEP7 Professional ein Projekt, welches ein das System WinAC repräsentierendes Software-Objekt umfasst, Öffnen, Anlegen und Bearbeiten kann. Ist auf demselben Engineering-System bzw. derselben Infrastruktur die Anwendung STEP7 nur als "Basic-Version" vorhanden, kann das entsprechende Projekt nur geöffnet werden, nicht jedoch ein Software-Objekt WinAC angelegt werden oder bearbeitet werden. Software-Objekte, die ein System WinAC repräsentieren, können durch die Produktfamilie WinCC allenfalls angelegt werden, wobei das Basis-Produkt WinCC Basic jedoch WinAC-Software-Objekte weder anlegen, noch öffnen oder bearbeiten kann.

In der Figur 1 bedeutet das Bezugszeichen "A" ("Anlegen") bei den WinCC-Anwendungen nicht implizit, dass die zugehörige Anwendung ein Projekt mit dem angelegten Objekt WinAC auch öffnen kann, denn in den Fällen, in denen das Objekt WinAC beispielsweise durch STEP7Professional angelegt wurde, enthält das Projekt automatisch auch ein "PLC Controller Objekt" und entsprechend auch ein "PLC Controller Feature" als Funktionsobjekt, und Projekte mit diesem Funktionsobjekt lassen sich eben nicht mit den WinCC-Anwendungen öffnen. Im Unterschied dazu kann das WinAC-Objekt auch durch WinCC-Anwendungen (ab der Ausbaustufe Comfort) angelegt werden; bei diesem Vorgang wird zunächst noch kein "PLC Controller Objekt" erzeugt, welches ein späteres Öffnen mit den WinCC-Produkten verhindern würde. Dieses wird erst beim Öffnen oder Bearbeiten des Projekts mit einer der STEP7-Anwendungen erzeugt. Daran ist zu erkennen, dass nicht primär das angelegte Objekt WinAC die Möglichkeiten des Anlegens, Öffnens und Bearbeitens steuert, sondern die konkret angelegten Software-Objekte mit den darin tatsächlich enthaltenen Funktionen, die durch die Funktionsobjekte, wie im folgenden beschrieben, erkannt werden können.

Anhand der Figur 2 wird im Folgenden dargestellt, dass ein Software-Objekt WinAC verschiedene Funktionen bzw. Funktionen-Gruppen aufweisen kann, wobei die Möglichkeiten, die sich mit einer gegebenen Auswahl von Anwendungen auf einer Infrastruktur in Bezug auf das Software-Objekt WinAC ergeben, davon abhängen, welche Funktionen bzw. Funktionen-Gruppen dem Software-Objekt WinAC derzeit zugeordnet sind bzw. in diesem enthalten sind. Im Folgenden wird davon ausgegangen, dass ein Software-Objekt WinAC immer mit einer Funktions-Gruppe ausgestattet ist, welches eine Steuerungsfunktion ausüben kann. Aus diesem Grund ist einem Projekt, in welchem ein Software-Objekt WinAC enthalten ist, ein Funktionsobjekt "PLC Controller Feature" zugeordnet; dieses ist in der Figur 2 mit dem Zusatz "must" versehen; damit wird veranschaulicht, dass eine Funktionen-Gruppe bzw. eine Funktion "PLC Controller" entweder immer Bestandteil eines Software-Objektes WinAC ist, oder (wie im vorliegenden Beispiel) dass ein Projekt, welches ein "must"-Feature enthält, nur dann geöffnet werden kann, wenn eine Anwendung zum Öffnen dieses Funktionsobjektes verfügbar ist. Dabei sei angenommen, dass sowohl die Anwendung STEP7 Basic als auch die Anwendung STEP7 Professional die Funktion bzw. Funktionen-Gruppe "PLC Controller" anlegen kann; dies ist durch die beiden Pfeile des Funktionsobjektes "PLC Controller Feature" zu den beiden genannten Anwendungen verdeutlicht. Im Unterschied dazu ist die Funktionsgruppe "WinAC" (erweiterte Funktionen) für das Software-Objekt WinAC optional, wobei eine solche Funktion bzw. Funktions-Gruppe nur von der Anwendung STEP7 Professional, nicht jedoch durch die kleinere Ausbaustufe STEP7 Basic angelegt werden kann. Auch dies ist durch einen Pfeil im oberen Teil der Figur 2 dargestellt.

Im Folgenden wird davon ausgegangen, dass ein Software-Objekt WinAC durch die Anwendung STEP7 Professional erzeugt und einem Projekt hinzugefügt wird; dies ist durch den senkrechten Pfeil im rechten Teil der Figur 2 dargestellt worden. Dazu werden im Folgenden zwei Fälle (1), (2) unterschieden, wobei im Fall (1) auf der Infrastruktur die Anwendung STEP7 Basic installiert ist, während im Fall (2) die Anwendungen WinCC Basic und WinCC Comfort zum Öffnen, Anlegen und Bearbeiten eines Projektes bzw. der Software-Objekte zur Verfügung stehen.

Bezogen auf den in der Figur 2 dargestellten Fall (1) ergibt sich bei der hier installierten Anwendung STEP7 Basic die Situation, dass das Projekt nicht bearbeitet werden kann, da der Funktions-Gruppe WinAC, welche durch das Funktionsobjekt WinAC Feature repräsentiert wird, die Anwendung STEP7 Basic zur Bearbeitung nicht zugeordnet ist, siehe auch Figur 1. Aus Figur 1 wird ebenfalls deutlich, dass das mit der Anwendung STEP7 Professional erzeugte Projekt mit der Anwendung STEP7 Basic geöffnet werden kann, da dem "must"-Funktionsobjekt "PLC Controller Feature" die Anwendung STEP7 Basic zum Öffnen zugeordnet ist. Dabei können solche als "optional" bezeichneten Funktionen bzw. die zugeordneten Funktionsobjekte außer Acht bleiben. Aus den in den Projektdaten gespeicherten Produktzuordnungen wird weiter deutlich, dass zu einer Bearbeitung des Projektes die Anwendung STEP7 Professional nötig wäre.

Im Fall (2) stehen die Anwendungen WinCC Basic und WinCC Comfort zur Verfügung, wobei sich hier die Frage stellt, ob das Projekt durch die hier verfügbaren Anwendungen WinCC Basic, WinCC Comfort geöffnet bzw. die darin enthaltenen Software-Objekte damit bearbeitet werden können. Aus der Figur 1 ist ablesbar, dass das hier gezeigte Gerät bzw. Gerätekombination WinAC mit dieser Anwendungs-Konstellation nicht bearbeitbar ist, da das zumindest benötigte Produkt bzw. Anwendung STEP7 Basic fehlt. Die Projektdaten können auch nicht geöffnet werden, da die Funktion bzw. Funktionen-Gruppe "PLC Controller" enthalten ist und somit das Funktionsobjekt "PLC Controller Feature" in den Projektdaten enthalten ist. Auch dies verlangt zum Öffnen zumindest die Anwendung STEP7 Basic. Zur Bearbeitung wäre sogar die Anwendung STEP7 Professional notwendig.

Nach dem Öffnen eines Projekts werden die Informationen über die verfügbaren Anwendungen (Produktinformationen) in den Projektdaten ergänzt. Im Fall (2) wäre dazu jedoch zusätzlich mindestens die Anwendung STEP7Basic notwendig (siehe Figur 1). Automatisch oder nach Anwender-Anweisung kann auch ein enthaltenes Hüllobjekt zu einem Vollobjekt ergänzt werden, sofern die dazu notwendige Anwendung (hier z.B. STEP7Professional) installiert ist. Die dabei hinzugefügten Funktionsobjekte werden beim nächsten Öffnen oder beim Bearbeiten des Projektes selbstverständlich berücksichtigt, so dass beispielsweise in den Fällen, in denen ein sog. "must"-Objekt ergänzt wurde, eine entsprechende Anwendung bereitzustellen ist.

Im Gegensatz zum Stand der Technik werden erfindungsgemäß neben den eigentlichen Software-Objekten, die projektiert werden und damit entweder als Hüllobjekte oder als Vollobjekte auftreten, weitere Objekte, nämlich die Funktionen-Objekte (Feature-Objekte), angelegt, die im Gegensatz zu den Software-Objekten von allen Anwendungen in allen Ausbaustufen gelesen und ausgewertet werden können. Dem gegenüber können die genannten Vollobjekte nicht von allen Anwendungen und deren Ausbaustufen gelesen oder verarbeitet werden. Hüllobjekte können, verglichen mit Vollobjekten, von mehr Anwendungen bzw. Ausbaustufen angelegt werden, aber nicht in jedem Fall vollständig bearbeitet werden. In einem späteren Schritt können solche Hüllobjekte so angereichert bzw. "migriert" werden, dass dadurch Vollobjekte mit einer festgelegten Anzahl von Funktionen oder Funktionen-Gruppen werden. Die Funktionsobjekte (Feature-Objekte) werden mit den eigentlichen Software-Objekten so verknüpft, dass beim Anlegen und speziell Verwenden von Funktionen bzw. Funktionen-Gruppen eine variable Anzahl von allgemein gültigen Funktionsobjekten (Feature-Objekten) angelegt werden, wobei für jede Funktion bzw. Funktionen-Gruppe aber nur jeweils ein Funktionen-Objekt angelegt werden, wogegen die Software-Objekte meist in vielfacher Menge auftreten können bzw. in unbegrenzter Anzahl "instantiiert" werden können. Die Funktionsobjekte geben dabei an, welche Funktionen bzw. Funktionen-Gruppen tatsächlich verwendet werden bzw. im Projekt oder der Projektdatei aufzufinden sind. Abhängig von den verwendeten Funktionen bzw. Funktionen-Gruppen können die Vollobjekte in verschiedenen Varianten auftreten. Die dadurch mögliche unterschiedliche Ausstattung von Vollobjekten macht es möglich, dass verschiedene Anwendungen und deren Ausbaustufen (Editionen) unterschiedliche Funktionen und Funktionen-Gruppen unterstützen. Unabhängig davon können alle Ausbaustufen der Anwendungen erkennen, welche Funktionen bzw. Funktionen-Gruppen verwendet werden können, und welche nicht. Zusätzlich kann festgestellt werden, welche Anwendungen in welcher Ausbaustufe (Edition) beim ursprünglichen Anlegen eines Software-Objektes verwendet wurde oder zumindest verwendet werden konnte.

Da Software-Objekte von den Anwendungen in den geringwertigeren Ausbaustufen (kleinere Editionen) oft nur als Hüllobjekte angelegt werden, muss diese Tatsache schon beim späteren Öffnen eines Projekts erkennbar sein, ohne dass die komplette Software-Objekt-Menge "gescannt" oder analysiert werden muss, was oft auch nicht möglich ist, da ein Projekt auch unbekannte Software-Objekte beinhalten kann. Daher kann sich erfindungsgemäß diese Untersuchung auf die Erfassung der gespeicherten Funktions-Objekte beschränken. Daran kann weiterhin auch erkannt werden, welche der im Projekt vorhandenen Hüllobjekte zu Vollobjekten migriert werden müssen, sofern ein Projekt bearbeitet werden soll, welches von einer Anwendung in einer zu geringen Ausbaustufe angelegt wurde. In solchen Fällen können nämlich nicht alle Software-Objekte direkt als Vollobjekte angelegt werden, wobei diese jedoch notwendig sind, um eine umfassende Bearbeitung eines Projektes durchzuführen. Die den Funktionsobjekten zuzuordnenden Anwendungs- oder Produktbeschreibungen der Anwendungen, die wiedergeben, welche Funktionen oder Funktionen-Gruppen von der jeweiligen Anwendung in welchem Umfang verarbeitet werden können, können ebenfalls in einer Projektdatei hinterlegt werden. Dabei können die Anwendungs- oder Produktbeschreibungen selbst, also die jeweilige Funktionalität der jeweiligen Anwendungen bzw. installierten Ausbaustufen der Anwendungen, ebenfalls als sog- Anwendungsobjekte gespeichert sein; diese Anwendungsobjekte können mit dem Installieren einer Anwendung in der Infrastruktur hinterlegt werden und eignen sich zum einfachen Vergleich mit den Funktionsobjekten.

## Patentansprüche

1. Verfahren für die Projektierung und/oder Programmierung einer multifunktionalen Komponente einer industriellen Automatisierungsanordnung,
wobei in einem Projekt eine Mehrzahl Software-Objekte (WinAC) gespeichert werden,
wobei die Software-Objekte (WinAC)
jeweils eine Funktionalität der Komponente betreffen,
wobei die Software-Objekte (WinAC) mit Funktionen ausgerüstet oder erweitert werden,
**dadurch gekennzeichnet,**
**dass** den Software-Objekten (WinAC) abhängig von der jeweiligen Funktionalität der enthaltenen Funktionen zumindest eine Anwendung (STEP7, WinCC) zur Programmierung zugeordnet ist, dass Angaben über die in den Software-Objekten (WinAC) des Projektes verwendeten Funktionen mit dem Projekt gespeichert werden,
**dass** die Angaben über die in den Software-Objekten (WinAC) verwendeten Funktionen als Funktionsobjekte (WinAC Feature, PLC Controller Feature) gespeichert werden, und
**dass** anhand der Angaben und anhand einer jeweiligen Art und/oder Ausbaustufe der Anwendungen (STEP7, WinCC) jeweils entschieden wird, ob von einer Infrastruktur mit installierten Anwendungen (STEP7, WinCC) das Projekt geöffnet werden kann oder darf.

2. Verfahren für die Projektierung und/oder Programmierung einer multifunktionalen Komponente einer industriellen Automatisierungsanordnung,
wobei in einem Projekt eine Mehrzahl Software-Objekte (WinAC) gespeichert werden,
wobei die Software-Objekte (WinAC)
jeweils eine Funktionalität der Komponente betreffen,
wobei die Software-Objekte (WinAC) mit Funktionen ausgerüstet oder erweitert werden,
**dadurch gekennzeichnet,**
**dass** den Software-Objekten (WinAC) abhängig von der jeweiligen Funktionalität der enthaltenen Funktionen zumindest eine Anwendung (STEP7, WinCC) zur Programmierung zugeordnet ist, dass Angaben über die in den Software-Objekten (WinAC) des Projektes verwendeten Funktionen mit dem Projekt gespeichert werden,
**dass** die Angaben über die in den Software-Objekten (WinAC) verwendeten Funktionen als Funktionsobjekte (WinAC Feature, PLC Controller Feature) gespeichert werden, und
**dass** anhand der Angaben und anhand einer jeweiligen Art und/oder Ausbaustufe der Anwendungen (STEP7, WinCC) jeweils entschieden wird, ob mittels der mit den installierten Anwendungen (STEP7, WinCC) ausgestatteten Infrastruktur ein jeweiliges Software-Objekt des Projektes angelegt oder bearbeitet werden kann oder darf.

3. Verfahren nach Patentanspruch 1 oder 2,
**dadurch gekennzeichnet,**
**dass** für jede Art oder jeden Typ einer im Projekt verwendeten Funktion oder für jede Art oder jeden Typ einer im Projekt verwendete Funktionsgruppe jeweils ein zugeordnetes Funktionsobjekt (WinAC Feature, PLC Controller Feature) im Projekt gespeichert wird, und
**dass** für die den verfügbaren Anwendungen (STEP7, WinCC) jeweils zum Öffnen, Anlegen und Bearbeiten zugeordneten Funktionen oder Funktionsgruppen jeweils ein Anwendungsobjekt in einer für die Projektierung und/oder Programmierung genutzten Infrastruktur gespeichert wird,
wobei die Entscheidung über die Möglichkeit oder die Befugnis zum Öffnen des Projektes und/oder über das Anlegen oder die Bearbeitung der im Projekt enthaltenen Software-Objekte (WinAC) jeweils durch einen Vergleich der Funktionsobjekte (WinAC Feature, PLC Controller Feature) mit den Anwendungsobjekten getroffen wird.

4. Verfahren nach einem der vorhergehenden Patentansprüche, **dadurch gekennzeichnet,**
**dass** bei den Software-Objekten (WinAC) zumindest zwischen Hüllobjekten, die ohne Funktionen oder nur mit Basisfunktionen ausgestattet sind, und Vollobjekten mit jeweils zumindest einer weiteren Funktion unterschieden wird.

5. Verfahren nach Patentanspruch 4,
**dadurch gekennzeichnet,**
**dass** die Hüllobjekte von allen verfügbaren Anwendungen (STEP7, WinCC) anlegbar sind.

6. Verfahren nach Patentanspruch 4 oder 5,
**dadurch gekennzeichnet,**
**dass** den Hüllobjekten keine Funktionsobjekte (WinAC Feature, PLC Controller Feature) oder nur Basisfunktionsobjekte zugeordnet sind.

7. Verfahren nach einem der Patentansprüche 4 bis 6,
**dadurch gekennzeichnet,**
**dass** beim Bearbeiten eines Software-Objektes als Hüllobjekt dieses bei Verwendung oder Zufügung zumindest einer zugehörigen Funktion zu einem Vollobjekt wird und dabei das zumindest eine entsprechende Funktionsobjekt (WinAC Feature, PLC Controller Feature) angelegt wird.

8. Verfahren nach Patentanspruch 7,
**dadurch gekennzeichnet, dass**
das neue Vollobjekt nur noch von Anwendungen (STEP7, WinCC) oder Anwendungsgruppen mit der entsprechenden Funktionalität und vorhandenen Anwendungsobjekten bearbeitet werden können.

9. Verfahren nach einem der Patentansprüche 7 oder 8,
**dadurch gekennzeichnet,**
**dass** erste Funktionsobjekte (PLC Controller Feature) als erforderlich gekennzeichnet werden, wobei Projekte mit Vollobjekten nicht mehr von Anwendungen (STEP7, WinCC) geöffnet werden können, wenn die zugehörigen Funktionsobjekte (PLC Controller Feature) als erforderlich gekennzeichnet sind und der Infrastruktur keine Anwendungen (STEP7, WinCC) oder keine Anwendungsobjekte zum Öffnen der als erforderlich gekennzeichneten Funktionsobjekte (PLC Controller Feature) zugeordnet sind, und
**dass** zweite Funktionsobjekte (WinAC Feature) nicht als erforderlich oder als optional gekennzeichnet werden, wobei Projekte mit solchen zweiten Funktionsobjekten (WinAC Feature) auch dann geöffnet werden können, wenn diesen zweiten Funktionsobjekten (WinAC Feature) kein Anwendungsobjekt oder keine verfügbare Anwendung (STEP7, WinCC) zugeordnet ist.

10. Verfahren nach Patentanspruch 9,
**dadurch gekennzeichnet,**
**dass** eines der zweiten Funktionsobjekte (WinAC Feature) eine Anwendung (STEP7, WinCC) bezeichnet, welche zum Erweitern eines als Hüllobjekt vorliegenden Software-Objektes zu einem Vollobjekt erforderlich ist.

11. Verfahren nach einem der vorhergehenden Patentansprüche,
**dadurch gekennzeichnet,**
**dass** die multifunktionale Komponente zumindest eine Funktionalität zur Steuerung und eine Funktionalität zum Bedienen und Beobachten umfasst, wobei die diesen Funktionalitäten zugeordneten Funktionen oder Funktionsgruppen jeweils unterschiedlichen Anwendungen (STEP7, WinCC) oder unterschiedlichen Anwendungsgruppen mit Anwendungen gleicher Art zugeordnet werden.

12. Verfahren nach Patentanspruch 11,
**dadurch gekennzeichnet,**
**dass** innerhalb einer Anwendungsgruppe mit Anwendungen (STEP7, WinCC) gleicher Art zwischen zumindest zwei Ausbaustufen der Anwendungen (STEP7, WinCC) unterschieden wird, wobei je nach Komplexität der einem Software-Objekt in Bezug auf die der Anwendungsgruppe zugeordneten der Funktionen entweder beide Ausbaustufen oder nur die höherwertige der Ausbaustufen zum Bearbeiten des Software-Objektes (WinAC) zugeordnet wird.

13. Verfahren nach einem der vorhergehenden Patentansprüche,
**dadurch gekennzeichnet,**
**dass** innerhalb einer Anwendungsgruppe mit Anwendungen (STEP7, WinCC) gleicher Art zwischen zumindest zwei Versionen der Anwendungen (STEP7, WinCC) unterschieden wird, wobei einem Funktionsobjekt die zum Öffnen oder Bearbeiten geeigneten der Versionen zugeordnet sind, wobei beim Öffnen oder Bearbeiten des Software-Objektes (WinAC) automatisch die Anwendung (STEP7, WinCC) in einer der geeigneten Versionen verwendet wird.

14. Verfahren nach einem der vorhergehenden Patentansprüche,
**dadurch gekennzeichnet,**
**dass** als die Infrastruktur ein Computersystem mit einer Entwicklungsumgebung verwendet wird.

## Claims

1. Method for projecting and/or programming a multifunctional component of an industrial automation assembly,
wherein a multiplicity of software objects (WinAC) are stored in a project,
wherein the software objects (WinAC) each relate to a functionality of the component,
wherein the software objects (WinAC) are equipped or expanded with functions,
**characterized**
**in that** at least one application (STEP7, WinCC) for programming is assigned to the software objects (WinAC) as a function of the respective functionality of the included functions,
**in that** information about the functions used in the software objects (WinAC) of the project are stored with the project,
**in that** the information about the functions used in the software objects (WinAC) are stored as function objects (WinAC Feature, PLC Controller Feature) and
**in that** on the basis of the information and on the basis of a respective type and/or expansion level of the applications (STEP7, WinCC) it is respectively decided whether the project can or must be opened by a piece of infrastructure with installed applications (STEP7, WinCC).

2. Method for projecting and/or programming a multifunctional component of an industrial automation assembly,
wherein a multiplicity of software objects (WinAC) are stored in a project,
wherein the software objects (WinAC)
each relate to a functionality of the component,
wherein the software objects (WinAC) are equipped or expanded with functions,
**characterized**
**in that** at least one application (STEP7, WinCC) for programming is assigned to the software objects (WinAC) as a function of the respective functionality of the included functions,
**in that** information about the functions used in the software objects (WinAC) of the project are stored with the project,
**in that** the information about the functions used in the software objects (WinAC) are stored as function objects (WinAC Feature, PLC Controller Feature), and
**in that** on the basis of the information and on the basis of a respective type and/or expansion level of the applications (STEP7, WinCC) it is respectively decided whether a respective software object of the project can or must be created or processed by means of the infrastructure equipped with the installed applications (STEP7, WinCC).

3. Method according to Patent Claim 1 or 2,
**characterized**
**in that** an assigned function object (WinAC Feature, PLC Controller Feature) is respectively stored in the project for each type of a function used in the project or for each type of a function group used in the project, and
**in that** an application object is respectively stored in a piece of infrastructure used for the projecting and/or programming for the functions or function groups which are assigned to the available applications (STEP7, WinCC) for respectively opening, creating and processing,
wherein the decision about the possibility or the permission to open the project and/or about the creation or the processing of the software objects (WinAC) contained in the project is respectively made by a comparison of the function objects (WinAC Feature, PLC Controller Feature) with the application objects.

4. Method according to one of the preceding patent claims,
**characterized**
**in that** with respect to the software objects (WinAC) a differentiation is made at least between envelope objects which are without functions or are equipped only with basic functions, and full objects which each have at least one further function.

5. Method according to Patent Claim 4,
**characterized**
**in that** the envelope objects can be created by all available applications (STEP7, WinCC).

6. Method according to Patent Claim 4 or 5,
**characterized**
**in that** the envelope objects are not assigned any function objects (WinAC Feature, PLC Controller Feature) or only basic function objects.

7. Method according to one of Patent Claims 4 to 6,
**characterized**
**in that** during the processing of a software object as an envelope object the latter becomes a full object when at least one associated function is used or added, and in the process the at least one corresponding function object (WinAC Feature, PLC Controller Feature) is created.

8. Method according to Patent Claim 7,
**characterized in that**
the new full object can be processed only by applications (STEP7, WinCC) or application groups with the corresponding functionality and existing application objects.

9. Method according to one of Patent Claims 7 or 8,
**characterized**
**in that** the first function objects (PLC Controller Feature) are characterized as necessary, wherein projects with full objects cannot be opened any more by applications (STEP7, WinCC) if the associated function objects (PLC Controller Feature) are characterized as necessary and the infrastructure is not assigned any applications (STEP7, WinCC) or any application objects for opening the function objects (PLC Controller Feature) which are characterized as necessary, and in that second function objects (WinAC Feature) are not characterized as necessary or as optional, wherein projects having such second function objects (WinAC Feature) can be opened even if these second function objects (WinAC Feature) are not assigned an application object or an available application (STEP7, WinCC).

10. Method according to Patent Claim 9,
**characterized**
**in that** one of the second function objects (WinAC Feature) denotes an application (STEP7, WinCC) which is necessary to expand a software object present as an envelope object into a full object.

11. Method according to one of the preceding patent claims,
**characterized**
**in that** the multifunctional component comprises at least one functionality for controlling and one functionality for operating and observing, wherein the functions or function groups which are assigned to these functionalities are respectively assigned to different applications (STEP7, WinCC) or different application groups with applications of the same type.

12. Method according to Patent Claim 11,
**characterized**
**in that** within one application group with applications (STEP7, WinCC) of the same type a differentiation is made between at least two expansion levels of the applications (STEP7, WinCC), wherein depending on the complexity of the one software object with respect to that of the functions assigned to the application group either both expansion levels or only the higher valued of the expansion levels is assigned for the processing of the software object (WinAC).

13. Method according to one of the preceding patent claims,
**characterized**
**in that** within an application group with applications (STEP7, WinCC) of the same type a differentiation is made between at least two versions of the applications (STEP7, WinCC), wherein those of the versions which are suitable for opening or processing are assigned to a function object, wherein when the software object (WinAC) is opened or processed the application (STEP7, WinCC) is automatically used in one of the suitable versions.

14. Method according to one of the preceding patent claims,
**characterized**
**in that** a computer system with a development environment is used as the infrastructure.

## Revendications

1. Procédé pour projeter et/ou programmer un composant multifonctionnel d'un dispositif d'automatisation industriel,
dans lequel plusieurs objets logiciels (WinAC) sont stockés dans un projet,
les objets logiciels (WinAC) concernent respectivement une fonctionnalité du composant,
les objets logiciels (WinAC) sont pourvus ou étendus avec des fonctions,
**caractérisé en ce que**
au moins une application (STEP7, WinCC) de programmation est affectée aux objets logiciels (WinAC) en fonction de la fonctionnalité respective des fonctions contenues,
les informations concernant les fonctions utilisées dans les objets logiciels (WinAC) du projet sont stockées parallèlement au projet,
les informations concernant les fonctions utilisées dans les objets logiciels (WinAC) sont stockées en tant qu'objets fonctionnels (WinAC Feature, PLC Controller Feature), et
sur la base des informations et d'un type respectif et/ou d'un niveau de développement des applications (STEP7, WinCC), il est décidé à chaque fois, si le projet peut ou est autorisé à être ouvert par une infrastructure comportant des applications installées (STEP7, WinCC).

2. Procédé pour projeter et/ou programmer un composant multifonctionnel d'un dispositif d'automatisation industriel,
dans lequel plusieurs objets logiciels (WinAC) sont stockés dans un projet,
les objets logiciels (WinAC) concernent respectivement une fonctionnalité du composant,
les objets logiciels (WinAC) sont pourvus de ou étendus avec des fonctions,
**caractérisé en ce que**
au moins une application (STEP7, WinCC) de programmation est affectée aux objets logiciels (WinAC) en fonction de la fonctionnalité respective des fonctions contenues, les informations concernant les fonctions utilisées dans les objets logiciels (WinAC) du projet sont stockées parallèlement au projet,
les informations concernant les fonctions utilisées dans les objets logiciels (WinAC) sont stockées en tant qu'objets fonctionnels (WinAC Feature, PLC Controller Feature), et
sur la base des informations et d'un type respectif et/ou d'un niveau de développement des applications (STEP7, WinCC), il est décidé à chaque fois si un objet logiciel respectif du projet peut ou est autorisé à être créé ou traité au moyen de l'infrastructure pourvue des applications installées (STEP7, WinCC).

3. Procédé selon la revendication 1 ou 2,
**caractérisé en ce que**
pour chaque sorte ou chaque type d'une fonction utilisée dans le projet ou pour chaque sorte ou chaque type d'un groupe de fonctions utilisé dans le projet, à chaque fois un objet fonctionnel affecté (WinAC Feature, PLC Controller Feature) est stocké dans le projet, et pour les fonctions ou les groupes de fonctions affectés aux applications disponibles (STEP7, WinCC) respectivement pour leur ouverture, leur création ou leur traitement, à chaque fois un objet d'application est stocké dans une infrastructure utilisée pour le projet et/ou la programmation,
dans lequel la décision au sujet de la possibilité ou l'habilitation d'ouvrir le projet et/ou au sujet de la création ou du traitement des objets logiciels (WinAC) contenus dans le projet est prise à chaque fois par une comparaison des objets fonctionnels (WinAC Feature, PLC Controller Feature) avec les objets d'application.

4. Procédé selon l'une des revendications précédentes,
**caractérisé en ce que**,
concernant les objets logiciels (WinAC), il est distingué au moins entre des objets enveloppe qui ne sont pas dotés de fonctions ou sont dotés uniquement de fonctions de base et des objets complets qui sont dotés d'au moins une autre fonction.

5. Procédé selon la revendication 4,
**caractérisé en ce que**
les objets enveloppe peuvent être créés par toutes les applications disponibles (STEP7, WINCC).

6. Procédé selon la revendication 4 ou 5,
**caractérisé en ce que**
aucun objet fonctionnel (WinAC Feature, PLC Controller Feature) n'est affecté aux objets enveloppe ou uniquement des objets de fonction de base leur sont affectés.

7. Procédé selon l'une des revendications 4 à 6,
**caractérisé en ce que**
lors du traitement d'un objet logiciel en tant qu'objet enveloppe, celui-ci se transforme en un objet complet lors de l'utilisation ou de l'adjonction d'au moins une fonction associée, et ainsi le au moins un objet fonctionnel correspondant (WinAC Feature, PLC Controller Feature) est créé.

8. Procédé selon la revendication 7,
**caractérisé en ce que**
le nouvel objet complet ne peut être traité que par des applications (STEP7, WinCC) ou des groupes d'application dotés de la fonctionnalité correspondante et des objets d'application présents.

9. Procédé selon l'une des revendications 7 ou 8,
**caractérisé en ce que**
des premiers objets fonctionnels (PLC Controller Feature) sont indiqués comme requis,
et des projets comportant des objets complets ne peuvent plus être ouverts par des applications (STEP7, WinCC) lorsque les objets fonctionnels associés (PLC Controller Feature) sont indiqués comme requis et qu'aucune application (STEP7, WinCC) ou qu'aucun objet d'application n'est affecté à l'infrastructure pour ouvrir les objets fonctionnels (PLC Controller Feature) indiqués comme requis, et
**en ce que** des seconds objets fonctionnels (WinAC Feature) ne sont pas indiqués comme requis ou sont indiqués comme optionnels, et des projets comportant de tels seconds objets fonctionnels (WinAC Feature) peuvent être ouverts même si aucun objet d'application ou aucune application disponible (STEP7, WinCC) n'est affecté(e) à ces seconds objets fonctionnels (WinAC Feature).

10. Procédé selon la revendication 9,
**caractérisé en ce**
**qu'**un des seconds objets fonctionnels (WinAC Feature) désigne une application (STEP7, WinCC) qui est requise pour étendre un objet logiciel présent sous forme d'un objet enveloppe en un objet complet.

11. Procédé selon l'une des revendications précédentes,
**caractérisé en ce que**
le composant multifonctionnel comprend au moins une fonctionnalité de commande et une fonctionnalité de manoeuvre et d'observation, dans lequel les fonctions ou les groupes de fonctions affectés à ces fonctionnalités sont affectés respectivement à différentes applications (STEP7, WinCC) ou à différents groupes d'application comprenant des applications du même type.

12. Procédé selon la revendication 11,
**caractérisé en ce que**,
à l'intérieur d'un groupe d'applications comprenant des applications (STEP7, WinCC) du même type, il est distingué entre au moins deux niveaux de développement des applications (STEP7, WinCC), et, selon la complexité du un objet logiciel, en ce qui concerne la fonction affectée au groupe d'applications, les deux niveaux de développement ou uniquement le plus évolué des niveaux de développement est (sont) affecté(s) au traitement de l'objet logiciel (WinAC).

13. Procédé selon l'une quelconque des revendications précédentes,
**caractérisé en ce**
**qu'**à l'intérieur d'un groupe d'applications comprenant des applications (STEP7, WinCC) du même type, il est distingué entre au moins deux versions des applications (STEP7, WinCC), dans lequel les versions appropriées pour ouvrir ou traiter sont affectées à l'objet fonctionnel et l'application (STEP7, WinCC) est utilisée automatiquement dans une des versions appropriées pour ouvrir ou traiter l'objet logiciel (WinAC).

14. Procédé selon l'une quelconque des revendications précédentes,
**caractérisé en ce**
**qu'**un système informatique possédant un environnement de développement est utilisé en tant qu'infrastructure.
